# FASCICULE DE BREVET EUROPEEN

(11) **EP 3 513 444 B1**
(45) Date de publication et mention de la délivrance du brevet: **15.06.2022**
(21) Numéro de dépôt: 17793684.6
(22) Date de dépôt: 28.08.2017
(51) Int. Cl.: H01M 50/244, H01M 50/256, H01M 50/264, B25F 5/02

(54) **DISPOSITIF À BATTERIE ÉLECTRIQUE, POUR SUPPORT DE BATTERIE**
ELEKTRISCHE BATTERIEVORRICHTUNG FÜR BATTERIESTÜTZE
ELECTRIC BATTERY DEVICE, FOR BATTERY SUPPORT

(30) Priorité: 13.09.2016 FR 1658492
(43) Date de publication de la demande: 24.07.2019
(73) Titulaire: PELLENC, 84120 Pertuis (FR)
(72) Inventeur: PELLENC, Roger, 84120 Pertuis (FR); FORTIER, Frédéric, 84240 La Bastide Des Jourdans (FR)
(74) Mandataire: Weber, Etienne Nicolas
(86) Numéro de dépôt international: PCT/FR2017/052292
(87) Numéro de publication internationale: WO 2018/050981

(56) Documents cités:
- EP-A2- 2 323 197
- JP-A- 2002 291 111
- JP-A- 2014 017 099
- US-A1- 2010 136 425

## Description

### Domaine technique

La présente invention concerne un dispositif de support pour une batterie d'accumulateurs électriques. Un tel dispositif est prévu pour recevoir temporairement une batterie électrique en vue de l'alimentation en énergie électrique d'un équipement ou d'un outil. Le dispositif peut aussi recevoir la batterie pour la charge de la batterie, ou encore pour le remisage de la batterie. L'invention trouve des applications dans le domaine des équipements et des outillages électroportatifs alimentés par une batterie autonome, c'est-à-dire une batterie amovible qui n'est pas intégrée au corps de l'équipement ou de l'outil auquel elle est destinée.

### Etat de la technique antérieure

Des avancées importantes en termes d'augmentation de la capacité et de réduction du poids des batteries électriques ont permis le développement d'outils ou d'équipements de forte puissance alimentés par batterie.

On trouve en effet des équipements tels que des tondeuses agraires, ou des outils tels que des tronçonneuses avec un moteur électrique d'une puissance supérieure à 2000 watt et alimentés en énergie par une batterie d'accumulateurs électriques. L'usage de batteries pour des outils de forte puissance, traditionnellement équipés de moteurs thermiques, reste toutefois incompatible avec l'intégration de la batterie dans le corps même de l'outil.

Les batteries sont ainsi généralement déportées de l'outil, pour conserver à l'outil un poids et une maniabilité compatibles avec une utilisation prolongée. L'utilisation de batteries déportées facilite également le remplacement d'une batterie défaillante, le cas échéant.

Une batterie déportée peut être portée, par exemple, à la ceinture ou au dos d'un utilisateur. Elle est alors reliée à son outil de destination au moyen d'un court cordon électrique. La batterie est généralement associée à un dispositif de support permettant de la rendre solidaire d'une ceinture ou d'un harnais de portage.

Un dispositif de support de batterie peut aussi exister sur un équipement tel qu'une tondeuse agraire électrique pour la fixation de la batterie lorsqu'elle est connectée au moteur de l'équipement. L'autonomie et le coût d'une batterie étant lié à la capacité de celle-ci, cela permet à l'utilisateur d'acheter et d'utiliser une batterie appropriée à ses besoins.

Un dispositif de fixation de batterie, muni d'un harnais de portage est connu, par exemple du document EP-A- 2 886 006. Dans ce document, la batterie est fixée sur un dispositif de support en effectuant une translation du haut vers le bas de la batterie sur une glissière évasée du dispositif de support. La batterie ne peut être mise en place que dans une seule position, sa poignée restant tournée vers le haut sur le harnais de portage. Lors du retrait de la batterie de son dispositif de support, il est nécessaire de maintenir ce dernier d'une main, l'autre main étant utilisée pour saisir la poignée de la batterie en exerçant un effort du bas vers le haut afin de désengager la batterie de la glissière. Le document EP2323197 divulgue un dispositif à batterie électrique comprenant un dispositif de fixation de batterie.

### Exposé de l'invention

La présente invention procède de l'identification d'un certain nombre de besoins permettant d'assurer le confort mais aussi la sécurité d'utilisation des équipements ou des outils associés à une batterie électrique autonome.

Ainsi, un but principal de l'invention est de proposer un support de batterie autorisant la fixation et la libération de la batterie à une seule main.

La possibilité d'opérer la fixation et la libération de la batterie à une seule main répond à un besoin de confort de l'utilisateur mais également à un besoin de sécurité pour le dégagement de l'utilisateur de son équipement électroportatif en cas d'incident.

Un autre but de l'invention est de proposer un dispositif adapté à l'usage d'une batterie avec différents outils, et en particulier des outils portés à la ceinture, des outils portés sur harnais, et des outils portés à la main.

Un autre but encore de l'invention est de proposer un support de batterie adapté à différentes postures de travail de l'utilisateur, par exemple une posture courbée, une posture accroupie, une posture debout à bras fléchis, et une posture debout à bras tendus vers le haut.

Pour atteindre ces buts, l'invention propose plus précisément un dispositif à batterie électrique, comprenant :
- une platine de fixation de batterie,
- au moins une batterie conjuguée à la platine de fixation de batterie, la batterie présentant une face principale appliquée contre la platine dans au moins une position de fixation sur la platine, et une poignée de saisie de la batterie, rigidement solidaire de la batterie,
- des organes de fixation de la batterie sur la platine de fixation, dans la position de fixation,
- au moins un verrou, pour le verrouillage de la batterie dans la position de fixation et
- au moins un organe de libération du verrou.

Conformément à l'invention :
- le verrou est solidaire de la batterie et
- l'organe de libération du verrou est ménagé sur une partie de la batterie pourvue de la poignée de saisie de la batterie, pour une saisie de la batterie et un actionnement concomitant de l'organe de libération du verrou à une seule main
- la poignée de saisie de la batterie est décalée en direction de la face principale de la batterie, par rapport à un centre de gravité de la batterie.

On entend par "batterie" un ensemble formé d'une batterie d'accumulateurs électriques et d'un carter logeant ces accumulateurs électriques.

Le carter peut être métallique, ou, de préférence, en matière plastique. On considère que la poignée de saisie de la batterie est rigidement solidaire de la batterie lorsqu'elle est rigidement solidaire de son carter ou formée d'une seule pièce avec le carter ou une partie du carter.

On considère, par ailleurs, que l'organe de libération du verrou est ménagé sur une partie de la batterie pourvue de la poignée lorsqu'il est disposé sur la poignée.

L'organe de libération du verrou doit, pour le moins, pouvoir être atteint par un doigt de la main saisissant la poignée. L'organe de libération du verrou, lorsqu'il est actionné par la main de l'utilisateur, permet d'agir sur le verrou ou pour le moins sur une partie mobile de verrou. Le verrou, ou pour le moins sa partie mobile, sont solidaires de la batterie, et en particulier du carter de la batterie.

La disposition du verrou sur la batterie, permet de réaliser des platines de fixation peu sophistiquées et à faible coût.

Ainsi, les platines de fixation peuvent être multipliées et prévues sur divers équipements électriques ou supports, susceptibles d'accueillir la batterie.

De préférence l'organe de libération peut être intégré directement à la poignée et dans une position permettant son actionnement intuitif lors de la saisie de la poignée. L'organe de libération du verrou peut en particulier être reçu mobile sur la poignée de saisie. Il s'agit, par exemple, d'un bouton positionné sur le dessus de la poignée et pouvant être actionné par le pouce de la main de l'utilisateur. Il peut s'agir aussi d'une barre de pression située sous la poignée en son milieu et saisie dans ce cas par les doigts entourant le dessous de la poignée. Le bouton ou la barre de pression peuvent aussi être disposés au niveau d'autres parties de la poignée ou à proximité de cette dernière tout en étant accessible par la main saisissant la poignée de la batterie et dans une position permettant d'éviter un déclenchement indésirable de l'organe de libération lors de la rencontre avec un objet externe à la batterie.

Ces caractéristiques, outre le fait de permettre un actionnement à une seule main permettent aussi une libération rapide et intuitive de la batterie en cas d'urgence.

Alors que son organe de libération est ménagé à proximité de la poignée, le verrou lui-même n'est pas nécessairement à portée de la main de l'utilisateur.

Il convient de noter que la batterie peut être pourvue de deux verrous, de deux poignées et de deux organes de libération associés respectivement aux deux verrous. Dans ce cas, les verrous sont de préférence configurés de manière que la libération de l'un d'entre eux seulement permet de séparer la batterie de la platine de fixation.

Par ailleurs, les poignées et les organes de libération des verrous peuvent de préférence être ménagés sur des côtés opposés d'un boîtier ou d'une coque de la batterie de manière à disposer d'une poignée tournée vers le haut dans deux positions opposées de fixation de la batterie sur la platine de fixation de batterie. Ces positions sont décrites plus loin.

Les organes de fixation de la batterie sur la platine de fixation de batterie permettent le maintien de la batterie sur la platine de fixation, en combinaison avec le verrou, de manière à éviter un mouvement relatif de la batterie par rapport à la platine de fixation.

Selon une réalisation particulière du dispositif, les organes de fixation de la batterie sur la platine de fixation peuvent comporter :
- au moins un premier organe de fixation, et au moins un deuxième organe de fixation, le premier organe de fixation et le deuxième organe de fixation étant ménagés sur la platine de fixation de batterie,
- au moins un troisième organe de fixation et au moins un quatrième organe de fixation, le troisième organe de fixation et le quatrième organe de fixation étant ménagés sur la batterie et configurés pour un engagement avec le premier organe de fixation et avec le deuxième organe de fixation lorsqu'une face principale de la batterie est appliquée contre la platine de fixation de batterie.

La face principale de la batterie et la partie de la platine de fixation de batterie qui lui est conjuguée sont, de préférence, sensiblement planes.

Les organes de fixation de la batterie et de la platine de fixation peuvent présenter une certaine symétrie. En particulier les premier et deuxième organes de fixation solidaires de la platine de fixation peuvent présenter une symétrie par rapport à un plan perpendiculaire à la platine de fixation, et les troisième et quatrième organes de fixation solidaire de la batterie peuvent présenter une symétrie correspondante par rapport à un plan perpendiculaire à la face principale de la batterie. Les plans de symétrie considérés ici sont de préférence confondus lorsque la batterie est en place sur la platine de fixation.

La symétrie des organes de fixation n'est pas nécessairement une symétrie stricte au sens géométrique du terme, mais suffisante pour autoriser une permutation entre les organes de fixation. La symétrie permet ainsi d'envisager plusieurs positions de fixation.

En particulier on peut distinguer :
- une première position de fixation dans laquelle le premier organe de fixation de la platine de fixation de batterie est en prise avec le troisième organe de fixation de la batterie et le deuxième organe de fixation de la platine de fixation de batterie est en prise avec le quatrième organe de fixation de la batterie, et
- une deuxième position de fixation dans laquelle le premier organe de fixation de la platine de fixation de batterie est en prise avec le quatrième organe de fixation de la batterie et le deuxième organe de fixation de la platine de fixation de batterie est en prise avec le troisième organe de fixation de la batterie.

Les deux positions correspondent à des orientations de la batterie sur la platine de fixation de batterie, opposées à 180 degrés d'angle. Dans les deux positions de fixation, la face principale de la batterie est tournée vers la platine et appliquée contre la platine.

La batterie peut être montée dans une des positions tête-bêche l'une de l'autre de manière à s'adapter, par exemple, à une posture debout à bras levés ou une posture courbée de l'utilisateur, ou encore de s'adapter à différents outils portés au-dessus ou en dessous de la taille de l'utilisateur.

En effet, les positions opposées de la batterie peuvent servir à orienter le cordon électrique d'alimentation de la batterie soit vers le haut soit vers le bas. Les termes haut et bas s'entendent ici par rapport à un portage vertical de la batterie. Les positions opposées de la batterie peuvent aussi servir à un déplacement du centre de gravité de la batterie par rapport à la platine de fixation de batterie et d'un éventuel harnais portant cette platine. Cet aspect est repris plus loin.

Selon une possibilité de réalisation particulière du dispositif de l'invention, le premier organe de fixation et le deuxième organe de fixation peuvent comporter chacun un crochet de fixation. Dans ce cas le verrou peut comporter une gâchette conjuguée aux crochets de fixation, de manière à s'insérer dans l'un ou l'autre des crochets dans une position verrouillée.

Bien qu'elle puisse être autonome des organes de fixation, la gâchette du verrou peut aussi former l'un du troisième et/ou du quatrième organe de fixation.

Les organes de fixation peuvent se présenter de manière générale sous la forme de crochets, de la manière indiquée ci-dessus, mais aussi sous la forme de rails ou de plots présentant un relief à complémentarité de forme. La complémentarité de forme s'entend entre les organes de fixation de la platine et de la batterie, respectivement, ou encore entre un ou plusieurs organes de fixation et la gâchette du verrou.

Le verrou n'est pas nécessairement un verrou à gâchette. Il peut s'agir également d'un verrou rotatif, d'un verrou à excentrique ou d'un verrou à penne venant prendre sur la platine de fixation de batterie. Dans tous les cas, un organe de libération du verrou, par exemple un bouton, une barre ou une molette, par exemple, sont configurés pour une libération du verrou concomitante avec la saisie de la poignée.

Comme mentionné précédemment, la batterie présente une face principale destinée à venir en contact avec la platine de fixation de batterie dans la position de fixation, et une poignée de saisie de la batterie. De manière avantageuse la poignée de saisie de la batterie est décalée en direction de la face principale, par rapport au centre de gravité de la batterie. Plus précisément, la poignée peut être décalée en direction de la face principale par rapport à un plan parallèle à la face principale et passant par le centre de gravité.

En particulier, la poignée de saisie de la batterie peut être disposée entre un premier plan passant par la face principale de la batterie, et un deuxième plan, parallèle au premier plan et passant par un centre de gravité de la batterie.

Dans cette configuration, lorsque la batterie est portée par sa poignée, et que son centre de gravité est situé sous la poignée, la face principale de la batterie n'est pas verticale mais présente un angle par rapport à la verticale, en raison du décalage de la poignée vers la face principale, par rapport au centre de gravité de la batterie.

L'angle d'inclinaison a pour effet d'exposer de manière privilégiée, par rapport à la verticale, au moins l'un des organes de fixation de la batterie, en l'occurrence le plus bas, c'est-à-dire le plus éloigné de la poignée. Cette exposition facilite sa prise avec un organe de fixation correspondant de la platine de fixation lorsque la batterie est approchée de la platine de fixation.

La batterie peut ainsi prendre place de manière très naturelle et intuitive sur une platine de fixation verticale.

Lorsque l'un des organes de fixation de la batterie est engagé sur un organe de fixation de la platine, la mise en place se poursuit en venant appliquer la face principale de la batterie sur la platine de fixation jusqu'à engagement des autres organes de fixation, et, le cas échéant, du verrou. Il s'agit d'un mouvement de pivotement autour d'un axe passant par le ou les premiers organes de fixation engagés, entre la position inclinée et une position parallèle à la platine de fixation.

La platine de fixation de batterie du dispositif de l'invention peut être solidaire d'un support de rangement, d'un équipement électrique ou d'un véhicule susceptible d'être alimenté en énergie par la batterie, tel qu'une tondeuse électrique, par exemple.

Selon une autre possibilité, le dispositif de l'invention peut comporter un harnais de portage de la batterie. Dans ce cas, la platine de fixation est solidaire du harnais. La platine est par exemple reliée à des bretelles du harnais et portée au dos de l'utilisateur. Le même harnais peut également être pourvu d'attaches ou de sangles pour la fixation d'outils lourds, tels que des outils de débroussailiage, de travail du sol ou des souffleurs.

Le dispositif peut encore comporter un connecteur électrique relié électriquement à la batterie par un cordon électrique, et attaché au harnais par l'intermédiaire d'une attache amovible. Le connecteur permet de connecter différents outils à la batterie. Dans d'autres applications le connecteur peut être relié à un connecteur conjugué d'un équipement électrique, par exemple une tondeuse électrique, devant être alimentée en énergie.

Le cordon électrique peut être relié à la batterie sur un côté de la batterie tourné vers la poignée. Il est ainsi possible de saisir, d'une seule main la batterie et le cordon électrique. En outre, l'orientation de la batterie, portée par la poignée ou fixée sur la platine de fixation, permet alors également de déterminer la position du cordon électrique.

D'autres caractéristiques et avantages de l'invention ressortent de la description qui suit, en référence aux figures des dessins. Cette description est donnée à titre illustratif et non limitatif.

### Brève description des figures

La figure 1A est une vue en plan d'une platine de fixation d'un dispositif conforme à l'invention.
La figure 1B est une vue transversale de la platine de fixation de la figure 1A.
La figure 2 est une perspective d'une batterie conjuguée à la platine de fixation des figures 1A et 1B.
La figure 3A est une représentation schématique d'une opération de mise en place de la batterie sur la platine de fixation.
La figure 3B est une vue en coupe du dispositif de la figure 3A.
Les figures 4 et 5 sont des coupes de détails d'organes de fixation et de verrouillage de la batterie et de la platine de fixation.
Les figures 6A et 6B sont des vues en plan du dispositif de l'invention pourvu d'un harnais de portage et illustrent deux positions de fixation de la batterie.

Les dessins des figures sont représentés en échelle libre.

### Description détaillée de modes de mise en œuvre de l'invention

Dans la description qui suit, les termes "haut" et "bas" se réfèrent à une position de la batterie telle que portée au dos d'un utilisateur.

Des parties identiques ou similaires des différentes figures sont repérés avec les mêmes signes de référence de manière à faciliter le report d'une figure à l'autre.

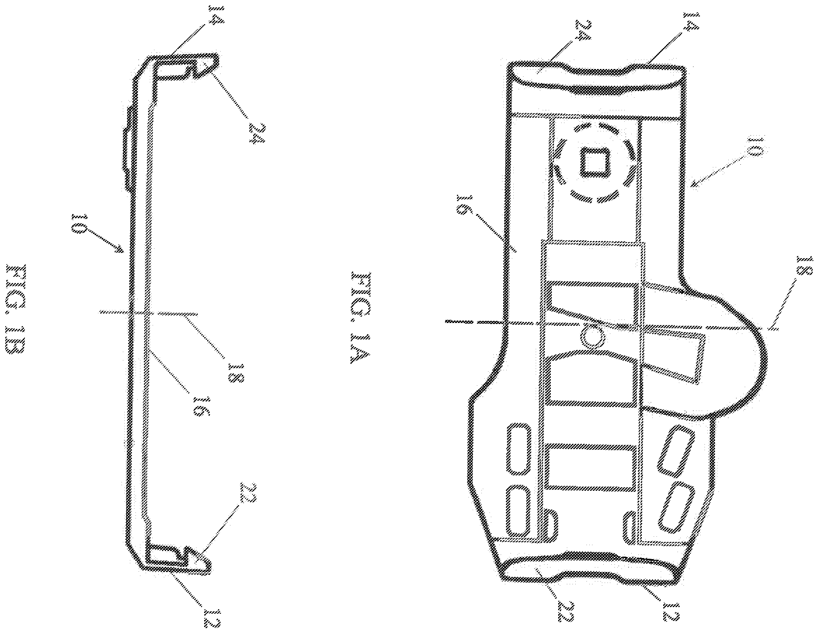

La figure 1A montre une platine 10 de fixation de batterie du dispositif de l'invention. La platine 10 est réalisée en matière plastique. Elle présente un premier et un deuxième organe de fixation de batterie 12, 14 faisant saillie sur une face principale 16 de la platine destinée à accueillir une batterie. Une face arrière de la platine, opposée à la face principale 16, est destinée à être rendue solidaire d'un support, et en particulier à un harnais décrit plus loin.

Les organes de fixation présentent une disposition et une configuration symétriques par rapport à un plan 18 perpendiculaire à la face principale de la platine de fixation.

La figure 1B montre mieux les organes de fixation 12, 14 en saillie sur la face principale 16 de la platine 10. On peut observer que les organes de fixation présentent des crochets 22, 24 tournés l'un vers l'autre et vers le plan de symétrie 18.

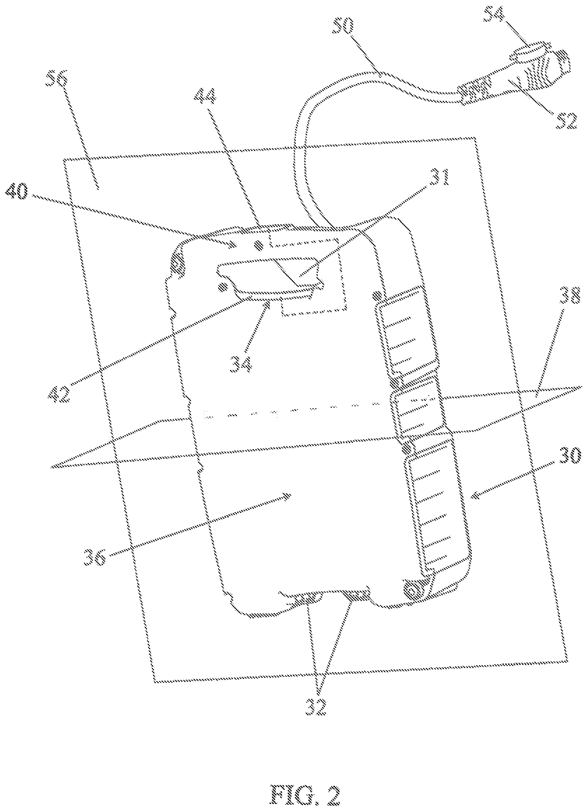

La figure 2 montre une batterie 30 destinée à être fixée à la platine de fixation 10. La batterie présente un troisième organe de fixation 32 et un quatrième organe de fixation 34 ménagés à proximité d'une face principale 36 de la batterie destinée à venir en contact avec la face principale 16 de la platine de fixation.

Le troisième organe de fixation 32 se présente ici sous la forme de deux saillies de la coque formant un pied de batterie. Le troisième organe de fixation peut être réalisé en matière plastique dans le prolongement de la coque de la batterie.

Le quatrième organe de fixation 34 se présente sous la forme d'une gâchette 42, montée coulissante et rétractable dans la coque de batterie à l'opposé du troisième organe de fixation. Elle fait saillie dans une partie ajourée 31 de la coque formant une poignée 40 de la batterie. La gâchette 42 peut être métallique ou en matière plastique, par exemple.

Les troisième et quatrième organes de fixation présentent des parties sensiblement symétriques, dans leur forme et/ou leur agencement, par rapport à un plan 38 perpendiculaire à la face principale de la batterie.

Alors que le troisième organe de fixation est fixe, le quatrième organe de fixation comporte la gâchette 42 qui est mobile.

La gâchette 42 forme un verrou, ou pour le moins la partie mobile du verrou. On considère que la gâchette 42 forme un verrou dans la mesure où elle est susceptible d'occuper une position de verrouillage interdisant la séparation de la batterie de la platine de fixation de batterie. Cette position est occupée lorsque la gâchette est en prise avec l'un des organes de fixation de la platine de fixation de batterie.

La gâchette 42 est chargée dans la position de verrouillage par un ressort non visible sur la figure. Elle est, par ailleurs, reliée à un organe d'actionnement 44 disposé sur la poignée 40 sous la forme ici d'un bouton poussoir. L'organe d'actionnement 44 permet de déplacer temporairement la gâchette 42 de la position de verrouillage vers une position rétractée à l'intérieur de la coque de la batterie autorisant le retrait de la batterie de la platine de fixation. L'organe d'actionnement 44 de la gâchette 42 constitue ainsi un organe de libération du verrou.

Un cordon électrique 50 relie la batterie 30 à un connecteur 52 destiné à la connexion de la batterie à un équipement électrique devant être alimenté en énergie. Le connecteur est pourvu d'une attache amovible 54, permettant de fixer également le connecteur sur un support, par exemple un harnais, décrit ultérieurement, de manière à maintenir le connecteur relativement à son support et de faciliter une opération de branchement d'un équipement au connecteur.

La position de portage de la batterie peut être celle illustrée par la figure 2. Dans cette position la poignée 40 se situe plus haut que le centre de gravité de la batterie et la face principale 36 de la batterie 30 est sensiblement verticale.

On peut observer que la poignée 40 se situe plus près de la face principale 36 de la batterie que de la face opposée à la face principale 36. La poignée 40 est en effet décalée en direction de la face principale, par rapport à un plan 56, parallèle à la face principale 36, et passant par le centre de gravité.

Dans l'exemple de la figure la poignée se situe entre le plan 56 contenant le centre de gravité et un plan passant par la face principale. La poignée peut encore être décalée davantage et au-delà du plan passant par la face principale.

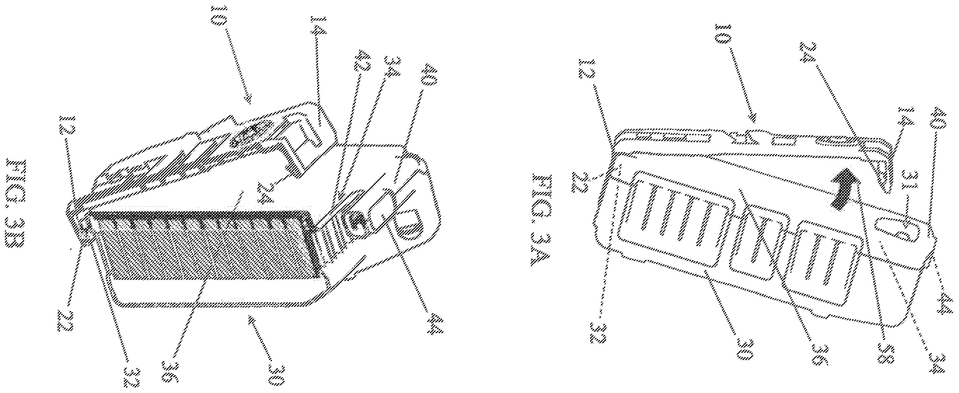

Le décalage de la poignée par rapport au centre de gravité a pour effet de donner à la batterie une inclinaison naturelle par rapport à la verticale lorsqu'elle est tenue par sa poignée. Cette inclinaison peut être mise à profit, comme le montrent les figures 3A, 3B pour la mise en place de la batterie sur la platine de fixation.

La figure 3A montre une platine 10 de fixation de batterie dans une position verticale, par exemple une platine montée sur un harnais (non représenté) posé au sol. L'inclinaison naturelle de la batterie 30, tenue par la poignée, permet d'engager d'abord le troisième organe de fixation 32 au bas de la batterie 30 sur le premier organe de fixation 12 de la platine de fixation. La face principale 36 de la batterie 30 est ensuite rabattue contre la platine de fixation pour provoquer l'engagement du quatrième organe de fixation 34 de la batterie sur le deuxième organe de fixation 14 de la platine. Ce mouvement est indiqué par une flèche 58.

La figure 3B est une coupe de la figure 3A dans un plan vertical perpendiculaire au plan de la face principale 36 de la batterie et passant par le troisième organe de fixation 32. Il permet de mieux visualiser la coopération entre le premier organe de fixation 12 de la platine de fixation 10 et le troisième organe de fixation 32 de la batterie 30 par l'intermédiaire du crochet 22.

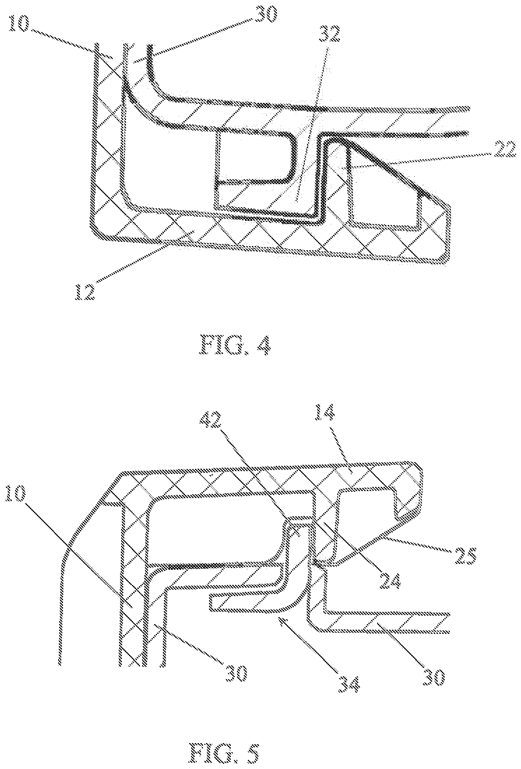

La figure 4 est une section à plus grande échelle montrant l'engagement du troisième organe de fixation 32 de la batterie sur le premier organe de fixation 12 de la platine de fixation 10.

Le troisième organe de fixation 32 est disposé à l'opposé de la poignée au niveau du pied de la batterie. Il est formé ici par deux excroissances dans le prolongement de la coque de la batterie 30 se présentant chacune sous la forme d'un rail. Le troisième organe de fixation vient s'insérer derrière le crochet 22 que forme le premier organe de fixation 12 de la platine de fixation 10.

La figure 5 est une section à plus grande échelle montrant l'engagement du quatrième organe de fixation 34 de la batterie 30 sur le deuxième organe de fixation 14 de la platine de fixation 10. Le quatrième organe de fixation 34, qui est ici formé par la gâchette 42 du verrou, vient se loger derrière le crochet 24 du deuxième organe de fixation 14 de la platine de fixation 10.

Au début de l'engagement du quatrième organe de fixation 34 sur le deuxième organe de fixation 14, une rampe 25 du crochet 24 permet de repousser la gâchette 42 du verrou à l'encontre du ressort (non visible) qui charge la gâchette.

Lorsque la batterie est en place, la gâchette se sépare de la rampe 25 et vient se loger derrière le crochet 24 du deuxième organe de fixation 14, comme Indiqué ci-dessus.

Une libération de la batterie demande une action sur l'organe d'actionnement 44 visible aux figures 2, 3B et qui constitue un organe de libération. Une action sur l'organe d'actionnement 44 permet en effet de rétracter la gâchette pour la désengager du crochet 24.

Il convient de noter que le troisième organe de fixation peut être réalisé sous la même forme que le quatrième organe de fixation et comporter également une gâchette et un organe de libération associé. Dans ce cas, une deuxième poignée, symétrique à la première poignée, peut également être prévue.

En raison de la configuration symétrique des organes de fixation par rapport aux plans 18 et 38 visibles sur les figures 1A, 1B et 2, l'engagement des organes de fixation peut être opposé. En d'autres termes, le quatrième organe de fixation de la batterie peut être engagé sur le premier organe de fixation de la platine de fixation et le troisième organe de fixation de la batterie peut être engagé sur le deuxième organe de fixation de la platine de fixation.

Dans ce cas la position de la batterie sur la platine de fixation est opposée à 180 degrés d'angle selon un plan parallèle à la face principale de la batterie.

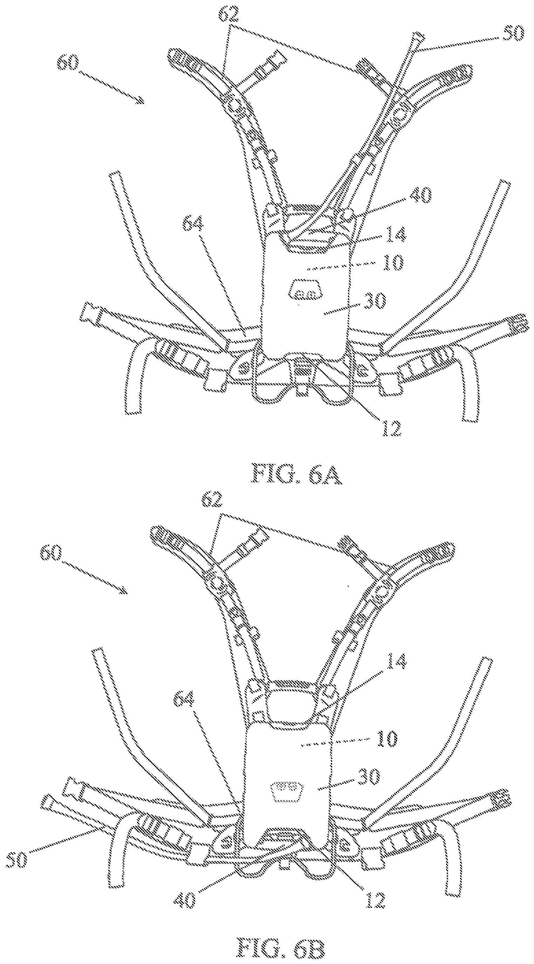

Les deux positions de la batterie, l'une avec la poignée 40 vers le haut, et l'autre avec la poignée 40 vers le bas, sont représentées aux figures 6A et 6B.

Les figures 6A et 6B montrent le dispositif de l'invention pourvu d'un harnais 60 et sur lequel est fixée une batterie 30. Le harnais 60 comprend pour l'essentiel des bretelles 62 et une ceinture de portage 64. Les bretelles et la ceinture sont solidaires de la platine de fixation 10, cette dernière n'étant pas visible car située derrière la batterie 30.

Dans la position de la batterie avec la poignée 40 vers le haut, le cordon électrique 50 peut, comme le montre la figure 6A, longer l'une des bretelles 62, et y être fixé, pour l'alimentation électrique d'un outil porté à la main, par exemple.

A l'inverse, dans la position de la batterie avec la poignée 40 vers le bas, le cordon électrique 50 peut, comme le montre la figure 6B, longer la ceinture 64, et y être fixé, pour l'alimentation électrique d'un outil porté à la ceinture ou à la taille.

La comparaison des figures 6A et 6B montre également que la hauteur de la batterie par rapport au harnais n'est pas la même dans les deux positions opposées. En effet le plan de symétrie 38 des organes de fixation de la batterie, visible à la figure 2 n'est pas nécessairement un plan médian de la batterie et ne contient pas nécessairement le centre de gravité de la batterie. Ainsi, le choix de l'orientation de la batterie permet aussi de déplacer son centre de gravité par rapport au harnais et de l'adapter à une posture de l'utilisateur, pour un meilleur confort de portage.

## Revendications

1. Dispositif à batterie électrique comprenant :
- une platine (10) de fixation de batterie,
- au moins une batterie (30) conjuguée à la platine de fixation de batterie, la batterie présentant une face principale (36) appliquée contre la platine (10) dans au moins une position de fixation sur la platine, et une poignée de saisie de la batterie, rigidement solidaire de la batterie,
- des organes de fixation (12, 14, 32, 34) de la batterie sur la platine de fixation, dans la position de fixation,
- au moins un verrou (42), pour le verrouillage de la batterie dans la position de fixation et
- au moins un organe (44) de libération du verrou,
**caractérisé en ce que** :
- le verrou (42) est solidaire de la batterie et
- l'organe de libération du verrou est ménagé sur une partie de la batterie pourvue de la poignée (40) de saisie de la batterie, pour une saisie de la batterie et un actionnement concomitant de l'organe de libération du verrou à une seule main,
- la poignée (40) de saisie de la batterie est décalée en direction de la face principale (36) de la batterie, par rapport à un centre de gravité de la batterie.

2. Dispositif selon la revendication 1 dans lequel l'organe de libération du verrou est reçu mobile sur la poignée (40) de saisie de la batterie

3. Dispositif selon l'une des revendications précédentes, dans lequel les organes de fixation de la batterie sur la platine de fixation comportent :
- au moins un premier organe de fixation (12), et au moins un deuxième organe de fixation (14), le premier organe de fixation et le deuxième organe de fixation étant ménagés sur la platine de fixation (10),
- au moins un troisième organe de fixation (32) et au moins un quatrième organe de fixation (34), le troisième organe de fixation et le quatrième organe de fixation étant ménagés sur la batterie et configurés pour un engagement avec le premier organe de fixation et avec le deuxième organe de fixation lorsque la face principale (36) de la batterie est appliquée contre la platine de fixation (10).

4. Dispositif selon la revendication 3, dans lequel le premier organe de fixation (12) et le deuxième organe de fixation (14) comportent chacun un crochet de fixation (22, 24) et dans lequel le verrou comprend une gâchette (42) conjuguée aux crochets de fixation.

5. Dispositif selon la revendication 4, dans lequel la gâchette (42) forme l'un du troisième et du quatrième organe de fixation.

6. Dispositif selon la revendication 1, dans lequel la poignée de saisie de la batterie, est disposée entre un premier plan passant par la face principale (36) de la batterie, et un deuxième plan (56), parallèle au premier plan et passant par le centre de gravité de la batterie.

7. Dispositif selon l'une quelconque des revendications 3 à 6, dans lequel les premier et deuxième organes de fixation (12,14) solidaires de la platine de fixation (10) présentent une symétrie par rapport à un plan (18) perpendiculaire à la platine de fixation, et les troisième et quatrième organes de fixation (32, 34) solidaires de la batterie présentent une symétrie correspondante par rapport à un plan (38) perpendiculaire à la face principale (36) de la batterie.

8. Dispositif selon la revendication 7, présentant :
- une première position de fixation dans laquelle le premier organe de fixation (12) de la platine (10) de fixation de batterie est en prise avec le troisième organe de fixation (32) de la batterie (30) et le deuxième organe de fixation (14) de la platine de fixation de batterie est en prise avec le quatrième organe de fixation (34) de la batterie, et
- une deuxième position de fixation dans laquelle le premier organe de fixation (12) de la platine (10) de fixation de batterie est en prise avec le quatrième organe de fixation (34) de la batterie (30) et le deuxième organe de fixation (14) de la platine de fixation de batterie est en prise avec le troisième organe de fixation (32) de la batterie.

9. Dispositif selon l'une quelconque des revendications précédentes, dans lequel l'organe de libération du verrou (44) comprend l'un parmi un bouton d'actionnement et un barre d'actionnement ménagés sur la poignée de saisie de la batterie.

10. Dispositif selon l'une quelconque des revendications précédentes, comprenant un harnais (60) de portage de la batterie, et dans lequel la platine de fixation est solidaire du harnais.

11. Dispositif selon la revendication 10, comprenant un connecteur électrique (52) relié électriquement à la batterie par un cordon électrique (50), le connecteur électrique pouvant être attaché au harnais (60) par l'intermédiaire d'une attache amovible (54).

12. Dispositif selon la revendication 11, dans lequel le cordon électrique (50) est relié à la batterie sur un côté de la batterie tourné vers la poignée (40).

## Patentansprüche

1. Vorrichtung mit elektrischer Batterie, umfassend:
- eine Batteriebefestigungsplatte (10),
- mindestens eine Batterie (30), die mit der Batteriebefestigungsplatte vereint ist, wobei die Batterie eine Hauptfläche (36) aufweist, die gegen die Platte (10) anliegt in mindestens einer Befestigungsposition auf der Platte, und einen Haltegriff der Batterie, der unbiegsam fest mit der Batterie verbunden ist,
- Befestigungselemente (12, 14, 32, 34) der Batterie auf der Befestigungsplatte, in der Befestigungsposition,
- mindestens einen Riegel (42), zum Verriegeln der Batterie in der Befestigungsposition und
- mindestens ein Element (44) zum Öffnen des Riegels,
**dadurch gekennzeichnet, dass**:
- der Riegel (42) mit der Batterie fest verbunden ist und
- das Element zum Öffnen des Riegels an einem Bereich der Batterie angeordnet ist, der mit dem Haltegriff (40) der Batterie versehen ist, um die Batterie zu greifen und das Element zum Öffnen des Riegels gleichzeitig mit einer Hand zu betätigen,
- der Haltegriff (40) der Batterie in die Richtung der Hauptfläche (36) der Batterie versetzt ist, in Bezug auf einen Schwerpunkt der Batterie.

2. Vorrichtung nach Anspruch 1, wobei das Element zum Öffnen des Riegels beweglich am Haltegriff (40) der Batterie empfangen wird.

3. Vorrichtung nach einem der vorhergehenden Ansprüche, wobei die Befestigungselemente der Batterie auf der Befestigungsplatte enthalten:
- mindestens ein erstes Befestigungselement (12) und mindestens ein zweites Befestigungselement (14), wobei das erste Befestigungselement und das zweite Befestigungselement auf der Befestigungsplatte (10) angeordnet sind,
- mindestens ein drittes Befestigungselement (32) und mindestens ein viertes Befestigungselement (34), wobei das dritte Befestigungselement und das vierte Befestigungselement an der Batterie angeordnet sind und für eine Verbindung mit dem ersten Befestigungselement und mit dem zweiten Befestigungselement konfiguriert sind, wenn die Hauptfläche (36) der Batterie gegen die Befestigungsplatte (10) angebracht ist.

4. Vorrichtung nach Anspruch 3, wobei das erste Befestigungselement (12) und das zweite Befestigungselement (14) jeweils einen Befestigungshaken (22, 24) enthalten und der Riegel eine mit den Befestigungshaken vereinte Zuhaltung (42) umfasst.

5. Vorrichtung nach Anspruch 4, wobei die Zuhaltung (42) eines des dritten und des vierten Befestigungselements bildet.

6. Vorrichtung nach Anspruch 1, wobei der Haltegriff der Batterie zwischen einer ersten Ebene eingerichtet ist, die durch die Hauptfläche (36) der Batterie verläuft, und einer zweiten Ebene (56), die parallel zur ersten Ebene liegt und durch den Schwerpunkt der Batterie verläuft.

7. Vorrichtung nach einem der Ansprüche 3 bis 6, wobei die ersten und zweiten Befestigungselemente (12, 14), die mit der Befestigungsplatte (10) fest verbunden sind, eine Symmetrie in Bezug auf eine Ebene (18) senkrecht zur Befestigungsplatte aufweisen, und die dritten und vierten Befestigungselemente (32, 34), die mit der Batterie fest verbunden sind, eine entsprechende Symmetrie in Bezug auf eine Ebene (38) senkrecht zur Hauptfläche (36) der Batterie aufweisen.

8. Vorrichtung nach Anspruch 7, aufweisend:
- eine erste Befestigungsposition, in der das erste Befestigungselement (12) der Batteriebefestigungsplatte (10) in Eingriff steht mit dem dritten Befestigungselement (32) der Batterie (30) und das zweite Befestigungselement (14) der Batteriebefestigungsplatte in Eingriff steht mit dem vierten Befestigungselement (34) der Batterie, und
- eine zweite Befestigungsposition, in der das erste Befestigungselement (12) der Batteriebefestigungsplatte (10) in Eingriff steht mit dem vierten Befestigungselement (34) der Batterie (30) und das zweite Befestigungselement (14) der Batteriebefestigungsplatte in Eingriff steht mit dem dritten Befestigungselement (32) der Batterie.

9. Vorrichtung nach einem der vorhergehenden Ansprüche, wobei das Element zum Öffnen des Riegels (44) einen von einem Betätigungsknopf und einer Betätigungsstange umfasst, die am Haltegriff der Batterie angeordnet sind.

10. Vorrichtung nach einem der vorhergehenden Ansprüche, einen Batterieträger (60) umfassend, wobei die Befestigungsplatte mit dem Träger fest verbunden ist.

11. Vorrichtung nach Anspruch 10, einen elektrischen Stecker (52) umfassend, der über ein elektrisches Kabel (50) elektrisch mit der Batterie verbunden ist, wobei der elektrische Stecker mittels einer entfernbaren Halterung (54) am Träger (60) angebracht werden kann.

12. Vorrichtung nach Anspruch 11, wobei das elektrische Kabel (50) an einer Seite der Batterie, die dem Griff (40) zugewandt ist, mit der Batterie verbunden ist.

## Claims

1. An electric battery device comprising:
- a battery fastening subplate (10),
- at least one battery (30) coupled to the battery fastening subplate, the battery having a main face (36) applied against the subplate (10) in at least one position for fastening on the subplate, and a handle for gripping the battery, rigidly secured to the battery,
- members (12, 14, 32, 34) for fastening the battery on the fastening subplate, in the fastening position,
- at least one lock (42), for locking the battery in the fastening position and
- at least one member (44) for releasing the lock,
**characterised in that**:
- the lock (42) is separate from the battery and
- the release member of the lock is formed on a portion of the battery provided with the gripping handle (40) of the battery, for gripping the battery and concomitantly actuating the release member of the lock with one hand,
- the gripping handle (40) of the battery is offset in the direction of the main face (36) of the battery, with respect to a centre of gravity of the battery.

2. The device according to claim 1, wherein the release member of the lock is movably received on the gripping handle (40) of the battery.

3. The device according to one of the preceding claims, wherein the members for fastening the battery on the fastening subplate include:
- at least one first fastening member (12), and at least one second fastening member (14), the first fastening member and the second fastening member being formed on the fastening subplate (10),
- at least one third fastening member (32) and at least one fourth fastening member (34), the third fastening member and the fourth fastening member being formed on the battery and configured for engagement with the first fastening member and with the second fastening member when the main face (36) of the battery is applied against the fastening subplate (10).

4. The device according to claim 3, wherein each of the first fastening member (12) and the second fastening member (14) includes a fastening hook (22, 24) and wherein the lock comprises a trigger (42) coupled with the fastening hooks.

5. The device according to claim 4, wherein the trigger (42) forms one of the third and of the fourth fastening members.

6. The device according to claim 1, wherein the gripping handle of the battery is disposed between a first plane passing through the main face (36) of the battery, and a second plane (56), parallel to the first plane and passing through the centre of gravity of the battery.

7. The device according to any one of claims 3 to 6, wherein the first and second fastening members (12, 14) secured to the fastening subplate (10) have a symmetry with respect to a plane (18) perpendicular to the fastening subplate, and the third and fourth fastening members (32, 34) secured to the battery have a corresponding symmetry with respect to a plane (38) perpendicular to the main face (36) of the battery.

8. The device according to claim 7, having:
- a first fastening position in which the first fastening member (12) of the battery fastening subplate (10) is engaged with the third fastening member (32) of the battery (30) and the second fastening member (14) of the battery fastening subplate is engaged with the fourth fastening member (34) of the battery, and
- a second fastening position in which the first fastening member (12) of the battery fastening subplate (10) is engaged with the fourth fastening member (34) of the battery (30) and the second fastening member (14) of the battery fastening subplate is engaged with the third fastening member (32) of the battery.

9. The device according to any one of the preceding claims, wherein the release member (44) of the lock comprises one from among an actuation button and an actuation bar formed on the gripping handle of the battery.

10. The device according to any one of the preceding claims, comprising a harness (60) for carrying the battery, and wherein the fastening subplate is secured to the harness.

11. The device according to claim 10, comprising an electrical connector (52) electrically connected to the battery by an electrical cord (50), the electrical connector being attachable to the harness (60) through a removable attachment (54).

12. The device according to claim 11, wherein the electrical cord (50) is connected to the battery on a side of the battery facing the handle (40).
